# FASCICULE DE BREVET EUROPEEN

(11) **EP 3 120 696 B1**
(45) Date de publication et mention de la délivrance du brevet: **12.12.2018**
(21) Numéro de dépôt: 16180725.0
(22) Date de dépôt: 22.07.2016
(51) Int. Cl.: A01K 1/015, E04C 2/42

(54) **PROCÉDÉ DE FABRICATION DE CAILLEBOTIS**
VERFAHREN ZUM HERSTELLEN VON GITTERROSTEN
METHOD FOR THE PRODUCTION OF GRATINGS

(30) Priorité: 23.07.2015 FR 1557030
(43) Date de publication de la demande: 25.01.2017
(73) Titulaire: Fournier, 35300 Fougeres (FR)
(72) Inventeur: LUCAS, M. Stéphane, 35410 Chateaugiron (FR)
(74) Mandataire: Vidon Brevets & Stratégie

(56) Documents cités:
- EP-A1- 2 471 357
- AT-B- 353 049
- CA-A1- 2 324 134
- FR-A1- 2 435 900
- FR-A3- 2 891 699
- IE-A1- 970 565

## Description

### 1. Domaine de l'invention

Le domaine de l'invention est celui de la fabrication de caillebotis en béton destinés à être mis en oeuvre pour la réalisation de planchers de bâtiments d'élevage, comme par exemple des étables.

### 2. Art antérieur

Le sol de certains bâtiments d'élevage, comme par exemple les étables, comprend un plancher traversé par des perforations et placé au-dessus d'une cuve à l'intérieur de laquelle débouchent ces perforations. Les perforations permettent aux excréments des animaux se déplaçant sur le plancher de s'écouler à l'intérieur de la cuve. L'entretien des bâtiments d'élevage de ce type est ainsi facilité.

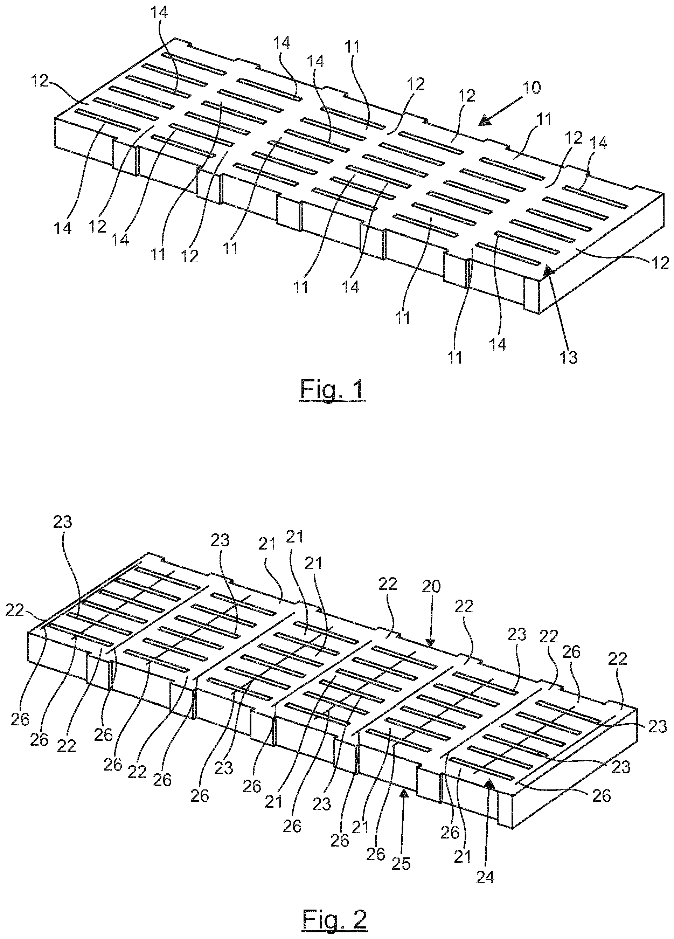

Ces planchers perforés sont souvent constitués d'une juxtaposition de caillebotis en béton reposant sur des murs périphériques délimitant la cuve. Un caillebotis de ce type est représenté en perspective à la figure 1.

Ainsi que cela est représenté sur cette figure 1, un caillebotis 10 comprend généralement des longerons 11 reliés par des traverses 12 et est traversé depuis sa surface supérieure 13 par des perforations 14. La surface supérieure 13 du caillebotis 13 est celle sur laquelle des animaux et des opérateurs sont susceptibles de se déplacer.

Afin de rendre la surface supérieure 13 des caillebotis 10 moins glissante, et ainsi de limiter le risque que les animaux et/ou les opérateurs se déplaçant dans les bâtiments d'élevage ne chutent, il est connu de ménager à la surface des caillebotis des irrégularités, comme par exemple des rainures.

Les caillebotis de ce type peuvent être fabriqués par la mise en oeuvre de divers procédés. Un procédé de fabrication d'un caillebotis selon le préambule de la revendication 1 est décrit dans la demande IE 970565 A1.

Un procédé de fabrication d'un caillebotis consiste par exemple à couler du béton dans un moule de forme appropriée prévu à cet effet en y plaçant le cas échéant préalablement le ferraillage requis. Après prise partielle ou complète du béton, le caillebotis perforé ainsi mis en forme est retiré du moule puis stocké. Les caillebotis sont ensuite acheminés sur leur lieu de mise en place afin d'être agencés de manière à composer le plancher d'un bâtiment d'élevage. Des irrégularités sont ensuite ménagées à leur surface dans le but de les rendre antidérapants. Pour cela, les opérateurs oeuvrant à leur mise en place pratique des irrégularités, par exemple sous la forme de rainures, à leur surface supérieure par enlèvement de matière. Un tel enlèvement de matière peut par exemple être réalisé au moyen d'outils motorisés comme par exemple des meuleuses à disque abrasif, ou au moyen d'outils tranchants manuels comme par exemple au marteau et au burin.

Selon un autre procédé, les irrégularités sont ménagées à la surface supérieure d'un caillebotis après son retrait du moule mais avant sa mise en place dans un bâtiment d'élevage. Dans ce cas, les irrégularités sont directement pratiquées en usine après démoulage, puis les caillebotis à surface irrégulière sont stockés en vue d'être ultérieurement acheminés sur leur lieu de mise en place. Tout comme dans le cadre de la mise en oeuvre du procédé précédemment décrit, les irrégularités sont pratiquées par des opérateurs par enlèvement de matière par exemple au moyen d'outils motorisés comme des meuleuses à disque abrasif, ou au moyen d'outils tranchants manuels comme par exemple au marteau et au burin. Le ménagement des irrégularités par enlèvement de matière peut encore être entièrement mécanisé, c'est-à-dire automatisé.

Ces deux procédés permettent de fabriquer de manière efficace des caillebotis en béton à surface présentant des irrégularités.

Ces procédés présentent toutefois des inconvénients.

En effet, les irrégularités sont ménagées à la surface des caillebotis par enlèvement de matière après prise totale ou partielle du béton. Cet enlèvement de matière, qu'il soit réalisé manuellement au mécanisé, induit la projection de fragments de béton, de poussières. De telles projections de particules de bétons peuvent avoir un impact défavorable sur la santé des opérateurs. En outre, elles imposent de nettoyer régulièrement le site sur lequel sont pratiquées les irrégularités afin d'évacuer ces fragments de béton.

Un autre inconvénient inhérent à la réalisation d'irrégularités à la surface des caillebotis par enlèvement de matière réside dans le fait que cela est particulièrement bruyant, ce qui peut également avoir un impact sur la santé des opérateurs.

La réalisation de rainures par enlèvement de matière suppose l'utilisation d'outils coupants ou abrasifs. Ces outils s'usent au fil du temps et doivent être régulièrement remplacés, ce qui représente un poste de coût non négligeable.

La réalisation d'irrégularités par enlèvement de matière induit encore une consommation énergétique importante tant lorsqu'elle est mise en oeuvre au moyen d'outils motorisés ou de manière automatisée.

Un autre inconvénient des irrégularités est qu'elles demandent du temps pour être réalisées, ce qui nuit à la productivité.

### 3. Objectifs de l'invention

L'invention a notamment pour objectif d'apporter une solution efficace à au moins certains de ces différents problèmes.

En particulier, selon au moins un mode de réalisation, un objectif de l'invention est de fournir une technique de fabrication de caillebotis de plancher de bâtiment d'élevage dont la surface supérieure présente des irrégularités, qui ne génère pas ou peu de nuisances pour les opérateurs oeuvrant à celle-ci comparativement aux techniques de l'art antérieur.

Notamment, l'invention a pour objectif, selon au moins un mode de réalisation, de fournir une telle technique de fabrication qui ne génère pas, lors de la réalisation des irrégularités de surface, de projection de matière.

Un autre objectif de l'invention est, selon au moins un mode de réalisation, de fournir une telle technique de fabrication qui ne soit pas trop bruyante comparativement aux techniques de l'art antérieur.

Un autre objectif de l'invention est, selon au moins un mode de réalisation, de fournir une telle technique de fabrication qui permette de réduire la consommation d'énergie comparativement aux techniques de l'art antérieur.

L'invention à encore pour objectif de fournir, dans au moins un mode de réalisation, une telle technique de fabrication qui soit productive.

Encore un objectif de l'invention est de fournir, dans au moins un mode de réalisation, une telle technique de fabrication qui soit simple et/ou économique à mettre en oeuvre.

### 4. Présentation de l'invention

Pour ceci, l'invention propose un procédé de fabrication d'un caillebotis en béton de plancher de bâtiment d'élevage, ledit caillebotis comprenant des longerons reliés par des traverses et étant traversé par des perforations, ledit procédé comprenant au moins les étapes suivantes :
- coulage de béton dans un moule de forme appropriée pour mettre en forme ledit caillebotis ;
- vibrage dudit béton contenu dans ledit moule ;
- formation d'irrégularités à la surface dudit caillebotis non recouverte par ledit moule, ladite formation d'irrégularités étant mis en oeuvre pendant le vibrage dudit béton ;
- retrait dudit moule du caillebotis dont la surface présente des irrégularités.

Ainsi, l'invention consiste selon cet aspect, à réaliser des irrégularités, comme par exemple des rainures, à la surface du caillebotis au cours du moulage alors que celui-ci se trouve toujours à l'intérieur du moule, et pendant le vibrage du béton.

Toutes les opérations de mise en forme du caillebotis sont réalisées alors qu'il se trouve dans le moule. Le caillebotis n'est alors pas manipulé pour passer d'un poste à un autre sans être contenu dans son moule. On évite ainsi que le caillebotis ne se dégrade au cours de sa fabrication.

Du fait que les opérations de vibrage du béton et de formation d'irrégularités ont lieux simultanément, un procédé de fabrication selon l'invention permet en outre d'augmenter la productivité.

Selon une caractéristique possible de l'invention, ladite étape de formation d'irrégularités comprend :
- une étape d'enfoncement pendant le vibrage dudit béton d'au moins une empreinte de forme appropriée depuis la surface dudit caillebotis non recouverte par ledit moule vers l'intérieur dudit moule, et
- une étape de retrait de ladite au moins une empreinte dudit caillebotis.

Selon cet aspect de l'invention, les irrégularités sont ménagées à la surface du caillebotis par déformation. Ceci s'oppose aux techniques de l'art antérieur selon lesquelles les irrégularités de surface sont ménagées par enlèvement de matière. La technique selon l'invention permet ainsi d'éviter la formation de poussières et la projection de particules de béton. En outre, la formations des irrégularités par enfoncement d'une empreinte est très peu bruyante comparativement aux techniques de l'art antérieur procédant par enlèvement de matière. La technique selon l'invention contribue ainsi à préserver la santé des opérateurs oeuvrant à la fabrication des caillebotis. La formation d'irrégularités par enfoncement d'empreinte est également plus économique que les techniques de l'art antérieur dans la mesure où il ne nécessite pas la mise en oeuvre d'outil coupant ou abrasif qui s'use dans le temps.

Selon une caractéristique possible de l'invention, l'enfoncement de ladite au moins une empreinte dans ledit béton se produit par gravité sous l'effet du poids de ladite au moins une empreinte et de la vibration dudit béton.

Selon cet aspect de l'invention, aucun apport énergétique supplémentaire spécialement dévolu à la réalisation des irrégularités n'est nécessaire. En effet, les irrégularités sont réalisées en utilisant l'énergie résultant de la vibration du béton. La technique selon l'invention permet ainsi de réduire de façon importante la consommation en énergie nécessaire à la fabrication de caillebotis à surface irrégulière comparativement aux techniques de l'art antérieur.

Selon une caractéristique possible de l'invention, ladite étape d'enfoncement de ladite au moins une empreinte dans ledit béton comprend l'application sur ladite au moins une empreinte d'une force en direction de l'intérieur dudit moule.

Dans ce cas, la formation des rainures nécessite un apport d'énergie complémentaire.

Si les irrégularités sont formées manuellement, alors la pression nécessaire sera appliquée sur la ou les empreintes par un ou plusieurs opérateurs. Dans ce cas, l'effort demandé aux opérateurs pour la réalisation des irrégularités sera moins important que celui demandé lorsqu'ils réalisent les irrégularités au marteau et au burin ou bien avec un outil portatif motorisé comme une meuleuse. En effet, l'enfoncement de la ou des empreintes est facilité par la mise en vibration du béton et du fait que le béton est encore liquide ou partiellement pris. Il nécessite ainsi le déploiement de peu d'efforts de la part des opérateurs.

Si la réalisation des irrégularités par enfoncement est mécanisée et met par exemple en oeuvre des vérins pour presser la ou les empreintes contre le béton, l'énergie nécessaire à cet enfoncement sera également très faible puisque l'enfoncement est facilité par la vibration du béton qui est encore liquide ou partiellement pris.

Ainsi, la consommation énergétique pour la réalisation des irrégularités selon l'invention sera nettement plus faible que lorsque les irrégularités sont pratiquées par enlèvement de matière selon l'art antérieur, que cet enlèvement de matière soit fait manuellement ou automatisé. Dans le premier cas, on soulagera le travail des opérateurs. Dans le second cas, on réduira les dépenses liées à la consommation d'énergie notamment électrique.

Selon une caractéristique possible de l'invention, ladite étape de retrait du caillebotis dudit moule est mise en oeuvre après prise partielle dudit béton.

La formation d'irrégularités pourra par exemple être réalisée alors que le béton est encore liquide ou en tout état de cause tant qu'il est suffisamment malléable pour être mis en mise en forme par enfoncement, c'est-à-dire avant qu'il ne durcisse de trop.

Ceci permet de réduire l'énergie nécessaire à la réalisation des irrégularités par enfoncement. Bien entendu, lorsque les empreintes seront enfoncées dans du béton encore liquide, celles-ci devront y être maintenu suffisamment longtemps de sorte que lorsqu'elles sont retirées du béton, les irrégularités restent formées dans celui-ci.

Selon une caractéristique possible de l'invention, lesdites perforations sont ménagées selon des axes parallèles entre eux et essentiellement parallèles auxdits longerons ou auxdites traverses, les irrégularités formées au cours de ladite étape de formation d'irrégularités étant ménagées essentiellement perpendiculairement ou parallèlement aux axes desdites perforations.

Le fait de ménager les irrégularités perpendiculairement aux perforations permet d'augmenter le caractère antidérapant des caillebotis.

Selon une caractéristique possible de l'invention, les irrégularités formées au cours de ladite étape de formation d'irrégularités comprennent des rainures ménagées de manière sinueuse.

Le fait de réaliser des rainures de manière sinueuse, c'est-à-dire non rectiligne, contribue également à augmenter le caractère antidérapant des caillebotis.

Les rainures pourront par exemple être ménagées de manières essentiellement sinusoïdales, en dents de scie, droite...

Selon une caractéristique possible de l'invention, la profondeur d'enfoncement dans ledit béton de ladite au moins une empreinte est comprise entre 1 et 5 millimètres.

Selon une caractéristique possible de l'invention, les irrégularités formées au cours de ladite étape de formation d'irrégularités comprennent des rainures ménagées selon une densité comprise entre 1 et 100 rainures par mètre linéaire de caillebotis pris dans le sens des longerons ou compris entre 1 et 100 par mètre linéaire de caillebotis pris dans le sens des traverses.

Selon une caractéristique possible de l'invention, lesdites irrégularités sont ménagées en saillie ou en creux à la surface dudit caillebotis.

### 5. Liste des figures

D'autres caractéristiques et avantages de l'invention apparaîtront à la lecture de la description suivante de modes de réalisation particuliers, donnée à titre de simples exemples illustratifs et non limitatifs, et des dessins annexés parmi lesquels :
- la figure 1 illustre une vue en perspective d'un caillebotis selon l'art antérieur ;
- la figure 2 illustre une vue en perspective d'un caillebotis selon l'invention ;
- les figures 3 à 5 illustrent des variantes de forme de rainures pouvant être réalisées à la surface d'un caillebotis selon l'invention ;
- la figure 6 illustre un logigramme d'un exemple de procédé de fabrication de caillebotis selon l'invention ;
- la figure 7 illustre un logigramme d'un exemple d'étape de rainurage d'un procédé selon l'invention ;
- les figures 8 à 11 illustrent le déplacement relatif des empreintes de rainurage par rapport au caillebotis au cours de la mise en oeuvre d'un procédé selon l'invention ;
- les figures 12, 13 et 14 illustrent respectivement une vue de dessus d'un exemple de moule de caillebotis selon l'invention, une vue en coupe selon l'axe A-A de la figure 12, et une vue en coupe selon l'axe B-B de la figure 12.

### 6. Description de modes de réalisation particuliers

### 6.1. Caillebotis

On présente en relation avec les figures 2 à 11 un exemple de caillebotis selon l'invention.

Ainsi que cela est représenté sur la figure 2, un tel caillebotis 20 comprend des longerons 21 sensiblement parallèles les uns aux autres. Ces longerons 21 sont reliés par des traverses 22 qui s'étendent essentiellement perpendiculairement aux longerons.

Le caillebotis 20 est traversé par des perforations 23.

Les perforations 23 sont ménagées entre les traverses 22. Elles s'étendent essentiellement parallèlement aux longerons 21. Ces perforations 23 sont traversantes, c'est-à-dire qu'elles traversent le caillebotis 20 depuis sa surface supérieure 24 jusqu'à déboucher à sa surface inférieure 25. La largeur de ces perforations 23 sera choisie de manière telle qu'elles permettent l'écoulement de lisier tout en prévenant le passage d'un membre à travers le caillebotis 20.

Le caillebotis 20 est classiquement réalisé en béton. Ce béton sera préférentiellement armé d'une armature métallique.

La surface supérieure 24 du caillebotis 20, c'est-à-dire la surface sur laquelle des animaux et des personnes seront amenés à se déplacer, présente des irrégularités.

Ces irrégularités présentent dans ce mode de réalisation la forme de rainures 26. Ces rainures pourront présenter diverses formes.

Ainsi que cela est représenté sur les figures, ces rainures 26 s'étendent essentiellement selon des axes perpendiculaires aux axes des perforations 23 dans un plan essentiellement parallèle à la surface supérieure 24 du caillebotis 20. Bien entendu, dans une variante, ces rainures 26 pourront s'étendre selon des axes essentiellement parallèles aux axes des perforations 23 ou bien de manière inclinées par rapport aux perforations dans le plan de la surface supérieure 24 du caillebotis. L'effet antidérapant procuré par les rainures 26 sera toutefois plus important dans le premier (rainures perpendiculaires) et dans le dernier (rainures inclinées) cas.

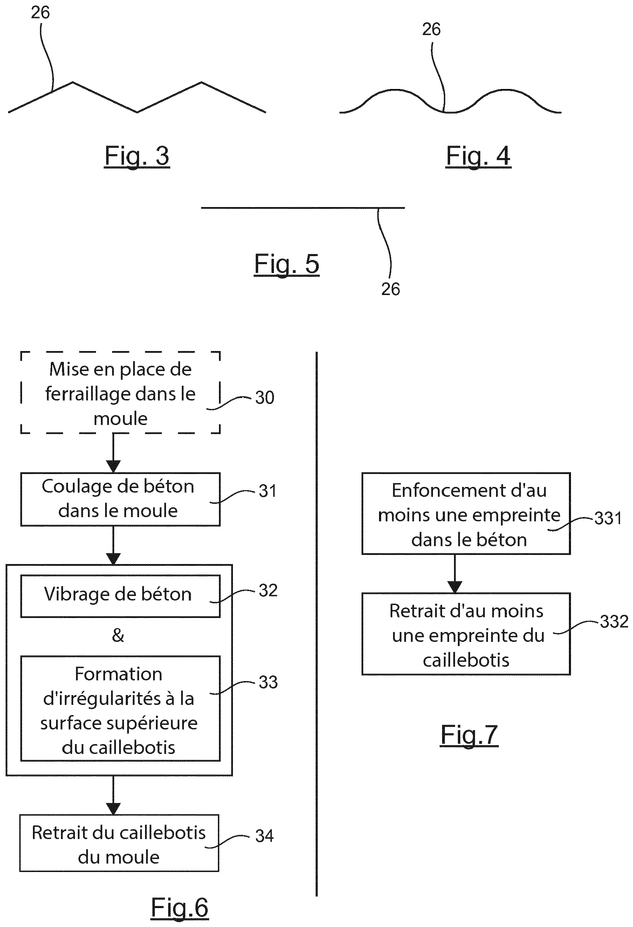

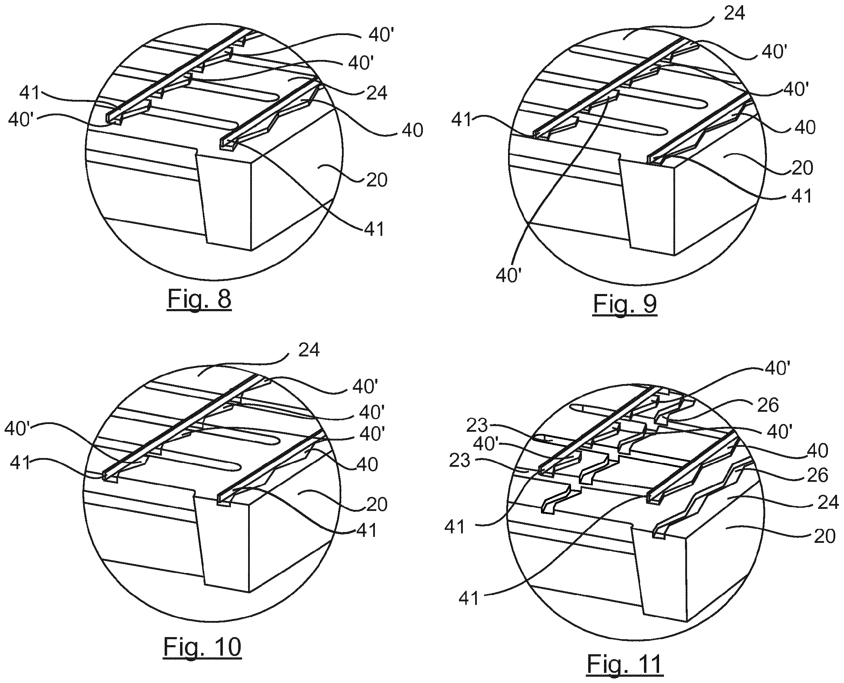

Les rainures 26 pourront s'étendre de manière rectiligne comme cela est représenté sur les figures 2 et 5. De manière préférentielle, elles s'étendront de manière sinueuse, c'est-à-dire de façon non rectiligne. Elles pourront par exemple s'étendre en suivant essentiellement le profil d'une courbe de type triangulaire tel que cela est représenté à la figure 3 et aux figures 8 à 11. Elles pourront s'étendre en dent de scie. Elles pourront encore s'étendre en suivant essentiellement le profil d'une courbe de type sinusoïdale tel que cela est représenté à la figure 4. Les rainures pourront être continues ou interrompues, par exemple par les perforations 23 comme cela apparaît à la figure 11.

La profondeur des rainures 26 sera préférentiellement comprise entre 1 et 50 millimètres.

La largueur des rainures 26 sera préférentiellement comprise entre 1 et 200 millimètres.

Le nombre de rainures 26 par caillebotis 20 pourra varier en fonction de la surface de celui-ci. Une rainure 26 pourra par exemple s'étendre sur chaque traverse 22 et entre deux traverses 22 successives comme cela est représenté à la figure 2. Bien évidemment, cette disposition n'illustre qu'une possibilité parmi de multiples possibilités.

Dans le cas où les rainures 26 sont ménagées essentiellement perpendiculairement ou de façon inclinée par rapport aux perforations 23, leur densité pourra par exemple être comprise entre 1 et 100 rainures 26 par mètre linéaire de caillebotis 20 pris dans le sens de la longueur, c'est-à-dire selon le sens des longerons 21.

Dans le cas où les rainures 26 sont ménagées essentiellement parallèlement aux perforations 23, leur densité pourra par exemple être comprise entre 1 et 100 rainures 26 par mètre linéaire de caillebotis 20 pris dans le sens de la largeur, c'est-à-dire selon le sens des traverses 22.

### 6.2. Procédé de fabrication

Un procédé de fabrication d'un caillebotis 20 selon l'invention va à présent être décrit en référence aux figures 6 à 11.

Un tel procédé comprend une étape de coulage de béton 31 dans un moule prévu à cet effet. Le coulage consiste à introduire de béton dans le moule par son côté ouvert.

Ce moule présente une forme adaptée pour la mise en forme du caillebotis. Il comprend ainsi notamment des éléments formant saillie pour permettre la réalisation des perforations traversant le caillebotis lors du moulage de celui-ci.

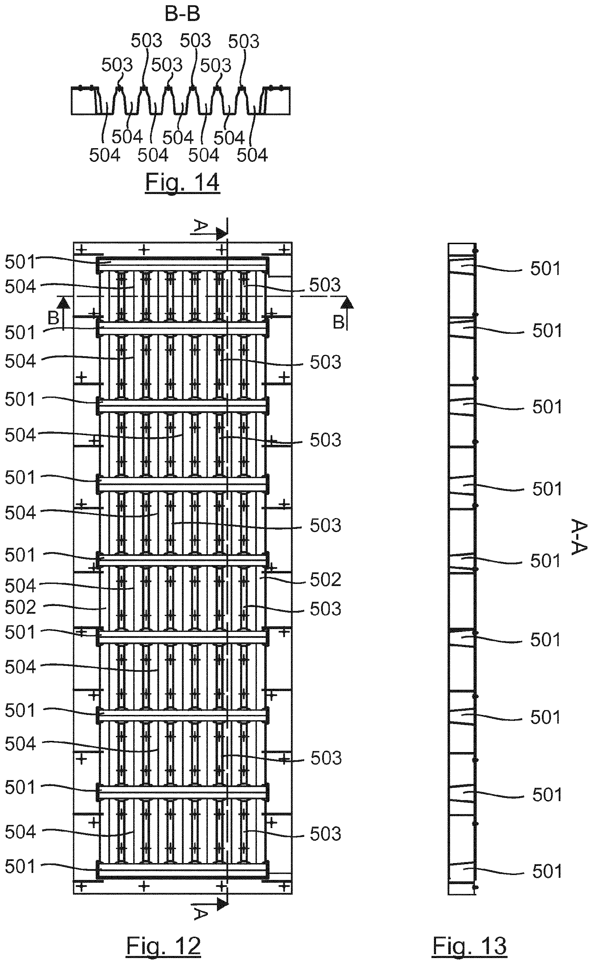

Un exemple d'un tel moule est représenté aux figures 11, 12 et 13. Ainsi que cela est représenté sur ces figures, un tel moule 50 comprend :
- des premiers éléments de contenant 501 prévus pour former les traverses du caillebotis ;
- des deuxièmes éléments de contenant 502 prévus pour former les longerons périphériques du caillebotis;
- des éléments formant saillie 503 délimitant entre eux des troisièmes éléments de contenant 504 pour former les autres longerons du caillebotis ainsi que leurs perforations.

Ce moule repose dans ce mode de réalisation sur une structure mécano soudée 505 lui conférant la résistance mécanique requise et permettant de faciliter son transport. Une telle conception est bien entendu une possibilité parmi d'autres. Ce moule comprend un fond et des parois latérales externes et internes. Il est ouvert, c'est-à-dire qu'il ne comprend pas de surface opposée au fond.

Lorsque le caillebotis 20 est réalisé en béton armé, le procédé comprend en outre une étape 30 de mise en place d'un ferraillage à l'intérieur du moule 31 préalablement au coulage du béton dans celui-ci.

Le procédé pourra également comprendre une étape de dépôt sur les parois internes du moule de produits chimiques tels que des agents facilitant le démoulage ou autre de manière connue en soit de l'homme du métier.

L'étape de coulage 31 est suivie d'une étape de vibrage du béton 32. Au cours de cette étape de vibrage 32, le moule contenant le béton encore liquide est mis en vibration de manière telle que le béton soit uniformément réparti dans le moule. Ce vibrage peut par exemple être obtenu en plaçant le moule sur une table vibrante ou autre.

Le procédé comprend une étape de formation d'irrégularités de surface 33, qui est dans ce mode de réalisation une étape de rainurage de la surface supérieure 24 du caillebotis 20, c'est-à-dire de la partie du caillebotis qui n'est pas recouverte par une paroi du moule. Cette étape de rainurage 33 est mise en oeuvre pendant l'étape de vibrage du béton 32.

L'étape de rainurage 33 comprend dans ce mode de réalisation :
- une étape d'enfoncement 331 pendant le vibrage du béton et vers l'intérieur du moule d'au moins une empreinte de formation d'irrégularités, en l'occurrence une emprunte de rainurage 40 de forme appropriée depuis la surface supérieure 24 du caillebotis 20 non recouverte par le moule, et
- une étape de retrait 332 de la au moins une empreinte 40 du caillebotis préférentiellement à la fin de l'étape de vibrage 32.

La figure 8 illustre la ou les empreintes de rainurage dans une position relevée au dessus du béton. Cette position est prise après le coulage du béton et avant le rainurage.

Une empreinte de rainurage 40 de forme adaptée sera enfoncée à chaque emplacement auquel il est souhaité de réaliser une rainure 26.

Les empreintes 40 pourront être indépendantes les unes des autres. Elles pourront alternativement être solidaires les unes des autres. Chaque empreinte pourra être formée d'un seul tenant ou bien comprendre plusieurs empreintes élémentaires 40' séparées les unes des autres par un espace, comme cela est visible aux figures 8 à 11. Ceci pourra par exemple être le cas, bien que cela ne soit pas indispensable, lorsque les rainures 26 sont ménagées perpendiculairement ou de manière inclinée par rapport aux perforations 23, l'espace entre chacune d'elles correspondant aux perforations 23.

Selon un premier mode de réalisation, les empreintes 40, 40' pourront être déposées sur le béton manuellement ou bien de manière robotisée. Leur enfoncement dans le béton se fera par gravité sous l'effet de leur poids et de la vibration du béton. Dans ce cas, l'homme du métier pourra par exemple choisir le poids des empreintes de rainurage de manière à obtenir un enfoncement des empreintes sur la profondeur souhaitée à l'issue du vibrage du béton. Il pourra en complément ou alternativement être prévu que les empreintes de rainurage comprennent des butées d'arrêt 41 prévue pour venir en appui contre certaines parois latérales du moule pour éviter qu'elles ne s'enfoncent trop profondément dans le béton.

Selon un autre mode de réalisation, les empreintes 40, 40' pourront être déposées sur le béton manuellement ou bien de manière robotisée. Leur enfoncement dans le béton se fera sous l'effet d'un effort appliqué sur les empreintes 40, 40' en direction de l'intérieur du moule, sensiblement perpendiculairement à la surface supérieure 24 du caillebotis 20. Cet effort pourra être exercé manuellement ou bien mécaniquement par un robot comprenant par exemple des vérins.

La figure 9 illustre les empreintes de rainurage en position de contact avec la surface supérieure 24 du caillebotis au début de l'étape de vibrage.

La figure 10 illustre les empreintes de rainurage en position enfoncées dans le caillebotis préférentiellement à la fin de l'étape de vibrage.

Une fois enfoncées, les empreintes 40 seront maintenues dans le béton pendant un certain temps. La durée de maintien dans le béton des empreintes 40 sera déterminée par l'homme du métier de manière telle :
- que le béton puisse prendre suffisamment de sorte que lorsque les empreintes 40, 40' sont retirées du moule, les rainures 26 restent formées sans que le béton ne s'effondre, mais
- qu'il ne prenne pas trop ce qui rendrait difficile voir impossible le retrait des empreintes 40, 40' du béton.

La durée de maintien des empreintes 40, 40' dans le béton pourra par exemple être comprise entre 1 seconde et 10 minutes. Bien évidemment, celle-ci dépend notamment de la composition du béton, des conditions opératoires (température, humidité)...

De manière préférentielle, les empreintes seront maintenues enfoncées dans le béton au moins pendant toute la durée du vibrage.

La profondeur d'enfoncement des empreintes sera préférentiellement comprise entre 1 et 50 millimètres.

A la fin de l'étape de vibrage 32 et le cas échéant de l'écoulement de la période d'enfoncement des empreintes 40, 40' dans le béton, celles-ci sont retirées du caillebotis 20. Ceci est illustré à la figure 11.

Le caillebotis 20 dont la surface supérieure 24 est rainurée ou présentent plus généralement des irrégularités peut alors être démoulé au cours d'une étape 34 de retrait du caillebotis du moule puis être stocké. Le démoulage est préférentiellement réalisé alors que le béton n'est que partiellement pris, ce qui permet de faciliter le démoulage et d'augmenter la productivité. Il est considéré que le béton est partiellement pris à partir du moment où il conserve sa forme après démoulage. Il doit alors être manipulé avec une relative précaution pour conserve celle-ci.

La prise du béton se poursuivra pendant le stockage des caillebotis.

### 6.3. Variantes

Dans des variantes les irrégularités de surface ménagées à la surface du caillebotis pourront prendre une autre forme que celle de rainures.

Il pourra de façon générale s'agir d'irrégularités formées en positif ou en négatif à la surface du caillebotis, c'est-à-dire en saillie ou en creux. Il pourra par exemple s'agir de pointes en forme de pyramide, de tronc de cône ou autre éléments ménagés en saillie ou en creux à la surface du caillebotis.

Les rainures pourront également être ménagées en saillie plutôt qu'en creux.

Lorsqu'elles seront formées en saillie, les irrégularités pourront préférentiellement présenter une hauteur comprise entre 1 et 50 millimètres.

## Revendications

1. Procédé de fabrication d'un caillebotis (20) en béton de plancher de bâtiment d'élevage, ledit caillebotis (20) comprenant des longerons (21) reliés par des traverses (22) et étant traversé par des perforations (23), ledit procédé comprenant au moins les étapes suivantes :
- coulage de béton (31) dans un moule (50) de forme appropriée pour mettre en forme ledit caillebotis (20) ;
- vibrage dudit béton (32) contenu dans ledit moule (50) ;
- formation d'irrégularités (33) à la surface dudit caillebotis (20) non recouverte par ledit moule (50)
- retrait dudit moule (50) du caillebotis (20) dont la surface présente des irrégularités,
**caractérisé en ce que** ladite formation d'irrégularités (33) est réalisée pendant le vibrage (32) dudit béton.

2. Procédé selon la revendication 1, dans lequel ladite étape de formation d'irrégularités (33) comprend :
- une étape (331) d'enfoncement pendant le vibrage (32) dudit béton d'au moins une empreinte (40) de forme appropriée depuis la surface dudit caillebotis (20) non recouverte par ledit moule (50) vers l'intérieur dudit moule (50), et
- une étape (332) de retrait de ladite au moins une empreinte (40) dudit caillebotis (20).

3. Procédé selon la revendication 2, dans lequel l'enfoncement (331) de ladite au moins une empreinte (40) dans ledit béton se produit par gravité sous l'effet du poids de ladite au moins une empreinte (40) et de la vibration dudit béton.

4. Procédé selon la revendication 2, dans lequel ladite étape (331) d'enfoncement de ladite au moins une empreinte (40) dans ledit béton comprend l'application sur ladite au moins une empreinte (40) d'une force en direction de l'intérieur dudit moule (50).

5. Procédé selon l'une quelconque des revendications 1 à 4, dans lequel ladite étape de retrait du caillebotis (20) dudit moule (50) est mise en oeuvre après prise partielle dudit béton.

6. Procédé selon l'une quelconque des revendications 1 à 5, dans lequel lesdites perforations (23) sont ménagées selon des axes parallèles entre eux et essentiellement parallèles auxdits longerons (21) ou auxdites traverses (22), les irrégularités (26) formées au cours de ladite étape (33) de formation d'irrégularités étant ménagées essentiellement perpendiculairement ou parallèlement aux axes desdites perforations (23).

7. Procédé selon l'une quelconques des revendications 1 à 6, dans lequel les irrégularités (26) formées au cours de ladite étape (33) de formation d'irrégularités comprennent des rainures ménagées de manière sinueuse.

8. Procédé selon l'une quelconque des revendications 2 à 7, dans lequel la profondeur d'enfoncement dans ledit béton de ladite au moins une empreinte (40) est comprise entre 1 et 50 millimètres.

9. Procédé selon l'une quelconque des revendications 1 à 8, dans lequel les irrégularités (26) formées au cours de ladite étape (33) de formation d'irrégularités comprennent des rainures ménagées selon une densité comprise entre 1 et 100 rainures (26) par mètre linéaire de caillebotis (20) pris dans le sens des longerons (21) ou compris entre 1 et 100 pris dans le sens des traverses (22).

10. Procédé selon l'une quelconque des revendications 1 à 9, dans lequel lesdites irrégularités sont ménagées en saillie ou en creux à la surface dudit caillebotis.

## Patentansprüche

1. Verfahren zum Herstellen eines Gitterrostes (20) aus Beton eines Stallbodens, wobei der Gitterrost (20) Längsträger (21) aufweist, die durch Querträger (22) verbunden sind und von Perforationen (23) durchquert sind,
wobei das Verfahren mindestens die folgenden Schritte aufweist:
- Gießen von Beton (31) in eine Form (50) mit einer Form, die geeignet ist, den Gitterrost (20) zu formen,
- Vibrieren des Betons (32), der in der Form (50) enthalten ist,
- Bilden von Unregelmäßigkeiten (33) an der Oberfläche des Gitterrostes (20), die nicht von der Form (50) bedeckt ist,
- Entfernen der Gitterrost (20), dessen Oberfläche Unregelmäßigkeiten aufweist, von dem Form (50),
**dadurch gekennzeichnet, dass** das Bilden von Unregelmäßigkeiten (33) während des Vibrierens (32) des Betons durchgeführt wird.

2. Verfahren nach Anspruch 1, wobei der Schritt des Bildens von Unregelmäßigkeiten (33) aufweist:
- einen Schritt (331) der Rammung mindestens einer Matrize (40) von geeigneter Form während des Vibrierens (32) des Betons von der Oberfläche des Gitterrostes (20) aus, die nicht von der Form (50) bedeckt ist, nach Inneren der Form (50) hin,
- einen Schritt (332) des Entfernens des mindestens eine Matrize (40) von dem Gitterrost (20).

3. Verfahren nach Anspruch 2, wobei die Rammung (331) des mindestens einer Matrize (40) in den Beton durch Schwerkraft unter der Einwirkung des Gewichtes des mindestens eine Matrize (40) und dem Vibrieren des Betons erfolgt.

4. Verfahren nach Anspruch 2, wobei der Schritt der Rammung (331) des mindestens einer Matrize (40) in den Beton das Ausüben einer Kraft auf den mindestens eine Matrize (40) in Richtung des Inneren der Form (50) aufweist.

5. Verfahren nach einem der Ansprüche 1 bis 4, wobei der Schritt des Entfernens des Gitterrostes (20) von der Form (50) nach dem teilweisen Abbinden des Betons umgesetzt wird.

6. Verfahren nach einem der Ansprüche 1 bis 5, wobei die Perforation (23) entlang von Achsen ausgebildet werden, die zueinander parallel und im Wesentlichen parallel zu den Längsträgern (21) oder den Querträgern (22) sind, wobei die Unregelmäßigkeiten (26), die während des Schrittes (33) des Bildens von Unregelmäßigkeiten gebildet werden, im Wesentlichen senkrecht oder parallel zu den Achsen der Perforierungen (23) ausgebildet werden.

7. Verfahren nach einem der Ansprüche 1 bis 6, wobei die Unregelmäßigkeiten (26), die während des Schrittes (33) des Bildens von Unregelmäßigkeiten gebildet werden, wellenförmig ausgebildete Rillen aufweisen.

8. Verfahren nach einem der Ansprüche 2 bis 7, wobei die Tiefe des Eindrückens in den Beton des mindestens eine Matrize (40) zwischen 1 und 50 Millimeter beträgt.

9. Verfahren nach einem der Ansprüche 1 bis 8, wobei die Unregelmäßigkeiten (26), die während des Schrittes (33) des Bildens von Unregelmäßigkeiten gebildet werden, Rillen aufweisen, die in einer Dichte zwischen 1 und 100 Rillen (26) pro Linearmeter Gitterrost (20) in Richtung der Längsträger (21), oder zwischen 1 und 100 in Richtung der Querträger (26), ausgebildet werden.

10. Verfahren nach einem der Ansprüche 1 bis 9, wobei die Unregelmäßigkeiten hervorstehend oder vertieft an der Oberfläche des Gitterrostes ausgebildet werden.

## Claims

1. Method of manufacturing a concrete grating (20) for a livestock building floor, wherein the grating (20) comprises stringers (21) connected by cross-members (22) that are crossed by perforations (23), wherein the method comprises at least the following steps:
- pouring concrete (31) into a mold (50) of a shape suitable for forming the grating (20);
- vibrating the concrete (32) contained in the mold (50);
- forming of irregularities (33) on the surface of the grating (20) not covered by the mold (50)
- removing from the mold (50) of the grating (20) whose surface has irregularities,
**characterised in that** the forming of irregularities (33) is carried out during the vibrating (32) of the concrete.

2. Method according to Claim 1, wherein the step of forming of irregularities (33) comprises:
- a step (331) during the vibrating (32) of the concrete of pressing at least one die (40) of appropriate shape into the surface of the grating (20) not covered by the mold (50) and directed towards the interior of the mold (50), and
- a step (332) of removing the at least one die (40) from the grating (20).

3. Method according to Claim 2, wherein the step (331) of pressing the at least one die (40) into the concrete is effected under gravity due to the weight of the at least one die (40) and the vibration of the concrete.

4. Method according to Claim 2, wherein the step (331) of pressing the at least one die (40) into the concrete comprises applying a force to the at least one die (40) in the direction of the interior of the mold (50).

5. Method according to any one of Claims 1 to 4, wherein the step of removing from the mold (50) the grating (20) is implemented after partial setting of the concrete.

6. Method according to any one of Claims 1 to 5, wherein the perforations (23) are formed along axes parallel to each other and substantially parallel to the stringers (21) or the cross-members (22), wherein the irregularities (26) formed during the step (33) of forming of irregularities are substantially perpendicular or parallel to the axes of the perforations (23).

7. Method according to any one of Claims 1 to 6, wherein the irregularities (26) formed during the step (33) of forming of irregularities comprise sinuous grooves.

8. Method according to any one of Claims 2 to 7, wherein the depth of pressing the at least one die (40) into the concrete is between 1 and 50 millimeters.

9. Method according to any one of Claims 1 to 8, wherein the irregularities (26) formed during the step (33) of forming of irregularities comprise grooves formed at a density of between 1 and 100 grooves (26) per linear meter of grating (20) taken in the direction of the stringers (21), or between 1 and 100 taken in the direction of the cross-members (22).

10. Method according to any one of Claims 1 to 9, wherein the irregularities protrude from, or are recessed into, the surface of the grating.
